# EUROPÄISCHE PATENTSCHRIFT

(11) **EP 2 176 649 B1**
(45) Veröffentlichungstag und Bekanntmachung des Hinweises auf die Patenterteilung: **01.12.2010**
(21) Anmeldenummer: 08784312.4
(22) Anmeldetag: 08.07.2008
(51) Int. Cl.: G01N 21/91, B29C 67/00

(54) **VERFAHREN ZUR BESTIMMUNG VON EIGENSCHAFTEN DREIDIMENSIONALER OBJEKTE**
METHOD FOR DETERMINING PROPERTIES OF THREE-DIMENSIONAL OBJECTS
PROCÉDÉ DE DÉTERMINATION DE PROPRIÉTÉS D'OBJETS TRIDIMENSIONNELS

(30) Priorität: 10.07.2007 DE 102007032439
(43) Veröffentlichungstag der Anmeldung: 21.04.2010
(73) Patentinhaber: Griessbach, Volker, 09131 Chemnitz (DE)
(72) Erfinder: GRIESSBACH, Sören, D-09131 Chemnitz (DE); GRIESSBACH, Volker, D-09131 Chemnitz (DE)
(74) Vertreter: Findeisen Hübner Neumann
(86) Internationale Anmeldenummer: PCT/DE2008/001126
(87) Internationale Veröffentlichungsnummer: WO 2009/006884

(56) Entgegenhaltungen:
- DE-A1- 4 414 775
- DE-A1- 10 057 686
- DE-A1- 19 527 446
- DE-A1- 19 645 377
- US-A1- 2007 097 360

## Beschreibung

Die Erfindung betrifft ein Verfahren zur Bestimmung von Eigenschaften dreidimensionaler Objekte, die mit einem generativen Verfahren, insbesondere mit einem thermischen generativen Verfahren, beispielsweise mittels Lasersintem, FDM (Fused Deposition Modeling) oder SMS (Selective Mask Sintering) erzeugt worden sind.

Für zahlreiche technische Gebiete werden "Rapid-Technologien" genutzt. Diesbezügliche Technologien unter Nutzung der Stereolithographie auf Basis der Photopolymerisation sind aus WO 92 / 11 577 A1 und DE 44 14 775A1 bekannt. Hierbei werden dreidimensionale Objekte durch lokal begrenzte chemische Reaktionen erzeugt, indem flüssige Monomere oder Oligomere durch Beaufschlagung mit UV-Strahlung zu einem festen Polymer vernetzt werden. Der Aufbau dieser dreidimensionalen Objekte erfolgt schichtweise. Sobald eine Schicht photochemisch erzeugt und auspolymerisiert ist, wird neues flüssiges Material auf diese Schicht aufgetragen und nachfolgend ebenfalls auspolymerisiert, so dass eine weitere Schicht entsteht.

Beim Lasersintern wird ein 3D-CAD-File in ein 2D-File durch Schneiden in dünne Schichten mit einer Dicke von typischerweise 0,10 mm bis 0,15 mm überführt und danach dem Prozessrechner übermittelt. Dieser steuert eine IR-Strahlung, die mittels eines Systems aus optischen Linsen und Spiegeln die Oberfläche der Pulverschicht je nach Kontur der 2D-Daten abscannt. Das Pulver wird dabei punktgenau in einer Schicht versintert. Nachdem eine Schicht bearbeitet ist, wird die Bauplattform entsprechend der gewählten Schichtdicke abgesenkt und eine neue Schicht Pulver wird aufgetragen. Somit wird ein dreidimensionales Objekt schichtweise generiert. Eine diesbezügliche Anlage ist beispielsweise aus DE 10 2004 012 682 A1 bekannt.

Neben dem Lasersintern werden zunehmend auch die als FDM (Fused Deposition Modeling) und SMS (Selective Mask Sintering) bezeichneten technischen Lösungen als thermische generative Verfahren eingesetzt.

Unabhängig von der konkreten Ausgestaltung von Verfahrensablauf und Gerätetechnik haben sich derartige thermische generative Verfahren grundsätzlich bewährt. Nachdem die Anwendung dieser Verfahren zunächst weitgehend auf eine Herstellung von Prototypen im Entwicklungsprozess beschränkt war, wird diese Technik zunehmend auch für eine Serienfertigung von Erzeugnissen kleiner und mittlerer Stückzahlen eingesetzt. Somit können im Vergleich zu konventionellen Verfahren kürzere Entwicklungszyklen, schnellere Produkteinführungszeiten ("time to market") und eine oftmals bessere Qualität der jeweiligen Erzeugnisse erreicht werden.

Trotz dieser unstrittigen Vorteile ist die Anwendung von thermischen generativen Verfahren zumindest für die Serienfertigung von sicherheitsrelevanten Bauteilen problematisch. Bauteile für Maschinen, Anlagen, Landfahrzeuge oder Flugzeuge müssen stark schwankenden Belastungen standhalten. Die Nutzbarkeit und Lebensdauer dieser Bauteile wird oft durch prozessbedingte Dichteschwankungen oder durch das Auftreten von Rissen an kritischen Stellen der Konstruktion begrenzt, die von zahlreichen Einflussfaktoren abhängen, wie zum Beispiel
- unvorhersehbare oder nichtbeherrschbare Prozessschwankungen
- geometrische Besonderheiten der Bauteile
- Werkstoffschwankungen bei Chargenwechsel und wechselnden klimatischen Bedingungen
- Überlastung durch mechanische, thermische und/oder chemische Beanspruchungen speziell der Oberflächen.

Diese gegenseitige Abhängigkeit und die nicht exakt vorhersehbaren Einflüsse führen zu stark voneinander abweichenden Prognosen über die tatsächlich erreichbare Belastbarkeit und Lebensdauer der Bauteile. Solche Bauteile können zwar durch Vermessung bezüglich der geometrischen Parameter und durch Gewichtsbestimmung bezüglich der Dichte und Festigkeit geprüft werden. Mit derartigen Prüfungen werden kleinere Mängel innerhalb einer Schicht oder innerhalb eines kleinen Bauteilbereiches jedoch nicht detektiert.

In diesem Zusammenhang haben Untersuchungen der Anmelderin ergeben, dass bei thermischen generativen Verfahren (z.B. Lasersinteranlage mit 175°C Temperatur im Arbeitsbereich) bereits geringe Temperaturunterschiede von 1°K bis 3°K Unterschiede in der Dichte in einer Größenordnung von 5% bis 10% bewirken. Bezogen auf die benannte Arbeitstemperatur ergeben also Abweichungen der Prozessparameter von lediglich 1% bis 2% Dichteunterschiede bis zu 10%. Sofern weiterhin berücksichtigt wird, dass eine um etwa 10% andere Dichte einen Festigkeitsverlust von bis zu 50% verursachen kann, wird offenkundig, dass ein erheblicher Bedarf an der Entwicklung eines Verfahrens für eine zerstörungsfreie Bestimmung von typischen Werkstoffparametern dreidimensionaler Objekte besteht, mit dem auch kleine Strukturfehler erfasst werden können. Ein solches Verfahren ist bisher jedoch nicht verfügbar. Auch die vom Fachmann eventuell in Betracht zu ziehende Übertragung von Prüfverfahren anderer technischer Gebiete auf die thermischen generativen Verfahren liefert keinen geeigneten Lösungsansatz.

So beschreibt beispielsweise DE 198 46 325 A1 eine technische Lösung zur Bestimmung der Wirksamkeit einer Sterilisation medizintechnischer Geräte unter Nutzung eines Chemoindikators. Diese chemische Substanz bewirkt nach einer Mindesteinwirkungszeit der notwendigen Prozessparameter einen Farbumschlag, wobei der Endpunkt des Farbumschlages vom Hersteller definiert und beschrieben ist. Demzufolge ist eine Aussage zur Wirksamkeit des Sterilisationsprozesses durch visuelle Bewertung des Indikators möglich.

Aus DE 43 03 858 A1 ist eine Vorrichtung zur optischen Auswertung kolorimetrischer Verfärbungszonen auf einem Träger zum Nachweis von gas- oder dampfförmigen Komponenten eines Gasgemisches bekannt. Bei dieser In-Prozess-Kontrolle wird Licht durch Verfärbungszonen gesendet, das über Fotozellen entweder ein Signal auslöst oder nicht auslöst. Dadurch wird aufgrund der zeitlichen Reihenfolge dieser Einzelsignale eine Aussage über das Fortschreiten der Verfärbungszonen bei Erreichen eines festgelegten Grenzwertes erreicht.

Obwohl die benannten DE 198 46 325 A1 und DE 43 03 858 A1 einen interessanten Ansatzpunkt aufweisen, indem eine zerstörungsfreie Bauteilprüfung durch Auswertung von farblichen Veränderungen realisiert wird, sind diese technischen Lösungen nicht für thermische generative Verfahren geeignet, bei denen wesentlich andere Werkstoff-, Temperatur- und Druckverhältnisse vorliegen. Außerdem ermöglichen diese Verfahren ohnehin nur eine pauschale Aussage über das Erreichen bzw. Nichterreichen eines vorab definierten Verfahrenspunktes, jedoch keine Ermittlung spezifischer Werkstoffparameter.

Aufgabe der Erfindung ist es, ein zerstörungsfreies Prüfverfahren zu schaffen, mit dem die Dichte von dreidimensionalen, mittels thermischer generativer Verfahren erzeugten Objekten bestimmt und eventuelle Bauteildefekte erkannt werden können.

Diese Aufgabe wird gelöst, indem das dreidimensionale Objekt zunächst vollständig in eine Farbflotte getaucht, nach einer definierten Verweilzeit aus der Farbflotte entnommen und nachfolgend einer bildanalytischen Auswertung unterzogen wird, indem die Intensität der Einfärbung durch Gerätetechnik ermittelt wird und wobei durch einen Vergleich der bildanalytischen Kennwerte von Einfärbung und vorab computertechnisch gespeicherten Referenzdaten eine Bewertung zur Dichte des dreidimensionalen Objektes erfolgt. Vorteilhafte Ausgestaltungen sind Gegenstand der abhängigen Ansprüche, deren technische Merkmale im Ausführungsbeispiel näher beschrieben werden.

Durch die erfindungsgemäße technische Lösung wird ein Verfahren geschaffen, mit dem die Dichte und eventuelle Bauteildefekte von dreidimensionalen und mittels thermischer generativer Verfahren erzeugten Objekten bestimmt werden können. Hierbei werden farblich messbare Veränderungen photoanalytisch bewertet.

Bei Anwendung dieses Verfahrens diffundieren Farbstoffe in das jeweilige dreidimensionale Objekt ein, ohne dass sich dessen Maße verändern. Durch die Diffusion wird eine Einfärbung des dreidimensionalen Objektes bewirkt. Aufgrund der Eigenschaften der vorgeschlagenen Farbstoffe erfolgt die Bindung dieser Farbstoffe an die Struktur des dreidimensionalen Objektes durch physikalische Effekte ohne Änderung der Materialeigenschaften. Nachdem die Verweilzeit erreicht ist, wird das dreidimensionale Objekt aus der Farbflotte entnommen. Nachfolgend wird, sofern notwendig, überschüssiger Farbstoff abgewaschen. Eine vorteilhafte Ausgestaltung sieht vor, dass das dreidimensionale Objekt zusätzlich getrocknet wird. Hierbei kann gegebenenfalls eine Beaufschlagung mit Vakuum erfolgen, in deren Folge das Wasser verdampft und eventuelle Störstellen besonders gut sichtbar werden. Sofern das Trocknen unter Vakuum bei einem Druck von 1 bis 5 mbar erfolgt, werden tiefe Risse und tiefer im Bauteil liegende Dichtestrukturen besser sichtbar. Danach erfolgt die eigentliche Bewertung des dreidimensionalen Objektes durch Auswertung der Farbintensität. Somit wird eine Prüftechnologie für generativ gefertigte Bauteile auf Grundlage einer Diffusionsfärbung verfügbar, wobei die Intensität des Eindringens des Farbstoffes ein Indiz für die Stärke bzw. Struktur der jeweiligen generativ erzeugten Schicht ist.

Das Verfahren kann beispielsweise über einen Personalcomputer in Verbindung mit einem Scanner oder ähnlichen Auswertegeräten und geeigneter Auswertesoftware kostengünstig und zuverlässig realisiert werden. Die sofortige objektive Bewertung erfordert kein speziell geschultes Fachpersonal und das Messergebnis kann schnell und sicher dokumentiert werden. In Abhängigkeit der jeweils konkreten Dichte und der eventuell vorhandenen Defekte jeder generativ erzeugten Schicht entstehen unterschiedlich intensive Färbungen. Bei nicht zu tolerierenden Abweichungen, die ein Indiz für Bauteilstörungen sind, werden Fehlermeldungen computertechnisch erstellt.

Die beschriebene Diffusionsfärbung von hochpolymeren Bauteilen ist ein zweckmäßiges Verfahren für die Darstellung relevanter Änderungen der Oberfläche durch Schwankungen der Dichte und Bildung von Rissen und deshalb insbesondere als "Voraussageverfahren" für dauerbelastbare Bauteile geeignet. Das Verfahren kann für verschiedenartige Anwendungen eingesetzt werden, bei denen eine Prüfung von thermisch generativ gefertigten dreidimensionalen Objekten bezüglich Dichte und Bauteildefekten notwendig ist. Eine derartige Sichtbarmachung von unterschiedlichen Dichtestrukturen ist sowohl unmittelbar nach dem Herstellungsprozess als auch bei späteren Untersuchungen zur Schädigung von ermüdungsbeanspruchten hochpolymeren Bauteilen möglich, wobei insbesondere sicherheitsrelevante Bauteile von Interesse sind.

Nachfolgend wird ein Ausführungsbeispiel der Erfindung beschrieben:

Bei Anwendung des vorgeschlagenen Verfahrens zur Bestimmung von Parametern dreidimensionaler Objekte, die mit einem thermischen generativen Verfahren, beispielsweise mit Lasersintern, FDM (Fused Deposition Modeling) oder SMS (Selective Mask Sintering) erzeugt worden sind, wird das zu prüfende dreidimensionale Objekt zunächst vollständig in eine Farbflotte getaucht. In einer bevorzugten Ausführung wird als Farbflotte eine wässrige Färbelösung verwendet, die besonders bei Polyamiden vorteilhaft ist. Ebenso kann die Farbflotte auch überwiegend Säurefarbstoffe aufweisen. Die Farbflotte weist Temperaturen zwischen 50° Celsius und 95° Celsius auf.

Nach einer definierten Verweilzeit, die in Abhängigkeit des jeweils konkreten generativen Verfahrens, der konkreten Werkstoffe und der verwendeten Farbflotte vorzugsweise zwischen 1,0 und 15,0 Minuten liegt, wird das dreidimensionale Objekt aus der Farbflotte entnommen, abgewaschen, getrocknet, mit Vakuum (vorzugsweise bei 1 bis 5 mbar) beaufschlagt und schließlich einer bildanalytischen Auswertung unterzogen.

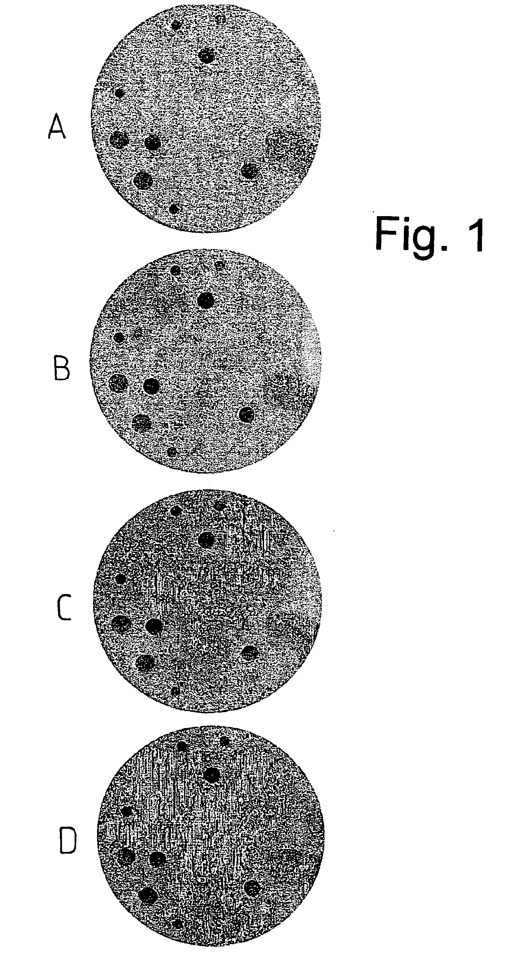

In der Zeichnung sind vier dreidimensionale Objekte A, B, C und D dargestellt, die mit dem erfindungsgemäßen Verfahren behandelt und bewertet worden sind. Diese zylinderförmigen Objekte weisen funktionell bedingte Bohrungen auf, die in der Zeichnung als jeweils kleine und dunkle Punktflächen erkennbar sind. Die weiteren gegenüber dem Farbton des Grundkörpers dunkleren Flächenabschnitte sind die verfahrensbedingten Einfärbungen. Hierbei weisen am Objekt A etwa 1%, am Objekt B etwa 10%, am Objekt C etwa 50% und am Objekt D etwa 80% der Bauteilstruktur Einfärbungen auf. Solche Einfärbungen sind grundsätzlich ein Indiz für eventuelle Dichteunterschiede im dreidimensionalen Objekt oder für eine vollständig fehlerhafte Dichte gegenüber der an sich angestrebten Dichte oder für Risse in der Bauteilstruktur. Die spezielle Farblösung diffundiert in die Oberflächen mit geringer Dichte und Rissen schneller ein und färbt das Bauteil am Ort der Störung intensiver als an den anderen Bauteilflächen. Folglich können die intensiv gefärbten Bauteilstrukturen zur Bewertung von Schwachstellen und Störungen genutzt werden. Hierbei wird zuerst die Intensität der Einfärbung durch Gerätetechnik ermittelt und danach erfolgt durch einen Vergleich der bildanalytischen Kennwerte von Einfärbung und vorab computertechnisch gespeicherten Referenzdaten eine Bewertung des dreidimensionalen Objektes.

## Patentansprüche

1. Verfahren zur Bestimmung von Eigenschaften dreidimensionaler Objekte, die mit einem generativen Verfahren, erzeugt worden sind, wobei
das dreidimensionale Objekt zunächst vollständig in eine Farbflotte getaucht, nach einer definierten Verweilzeit aus der Farbflotte entnommen, danach abgewaschen, getrocknet und mit Vakuum beaufschlagt und nachfolgend einer bildanalytischen Auswertung unterzogen wird, indem die Intensität der Einfärbung durch Gerätetechnik ermittelt wird, wobei durch einen Vergleich der bildanalytischen Kennwerte von Einfärbung und vorab computertechnisch gespeicherten Referenzdaten eine Bewertung bezüglich Dichte und Bauteildefekten des dreidimensionalen Objektes erfolgt.

2. Verfahren nach Anspruch 1, **dadurch gekennzeichnet,**
**dass** die Verweilzeit des dreidimensionalen Objektes in der Farbflotte 1,0 bis 15,0 Minuten beträgt.

3. Verfahren nach Anspruch 1, **dadurch gekennzeichnet,**
**dass** die Farbflotte Temperaturen zwischen 50° Celsius und 95° Celsius aufweist.

4. Verfahren nach Anspruch 1, **dadurch gekennzeichnet,**
**dass** die Farbflotte eine wässrige Färbelösung ist.

5. Verfahren nach Anspruch 1, **dadurch gekennzeichnet,**
**dass** die Farbflotte überwiegend Säurefarbstoffe aufweist.

6. Verfahren nach Anspruch 1, **dadurch gekennzeichnet,**
**dass** das Trocknen unter Vakuum bei einem Druck von 1 bis 5 mbar erfolgt.

## Claims

1. A method for determining properties of three-dimensional objects that have been produced by a generative method wherein
the three-dimensional object is first completely immersed in a dyeing liquor, removed from the dyeing liquor after a defined residence time, then washed off, dried and exposed to a vacuum, and subsequently subjected to an image-analytical evaluation in which the intensity of the coloration is determined using apparatuses, wherein an assessment with regard to density and component defects of the three-dimensional object is effected by comparing the image-analytical characteristic values of coloration to reference data stored in advance using computer technology.

2. The method according to claim 1, **characterized**
**in that** the residence.time of the three-dimensional object in the dyeing liquor is 1.0 to 15.0 minutes.

3. The method according to claim 1, **characterized**
**in that** the dyeing liquor has temperatures in the range from 50° Celsius to 95° Celsius.

4. The method according to claim 1, **characterized**
**in that** the dyeing liquor is an aqueous dyeing solution.

5. The method according to claim 1, **characterized**
**in that** the dyeing liquor predominantly comprises acid dyes.

6. The method according to claim 1, **characterized**
**in that** drying is performed at a pressure from 1 to 5 mbar.

## Revendications

1. Procédé de détermination de propriétés d'objets tridimensionnels qui, eux, ont été produits moyennant un procédé génératif lors duquel l'objet tridimensionnel est d'abord entièrement immergé dans un liquide colorant pour, après un temps d'immersion défini, être sorti du liquide colorant avant d'être lavé, séché et mis sous vide, afin de le soumettre à une analyse d'image. Pour cela, il est déterminé l'intensité de la coloration à l'aide d'appareils techniques, ce qui permet de déterminer, en comparant les résultats obtenus par l'analyse d'image de la coloration avec les caractéristiques de référence mémorisées par ordinateur au préalable, la densité et les éventuelles anomalies dans les différents composants de l'objet tridimensionnel.

2. Procédé suivant la revendication 1, **caractérisé en ce**
**que** le temps d'immersion de l'objet tridimensionnel dans le liquide colorant est de 1,0 à 15,0 minutes.

3. Procédé suivant la revendication 1, **caractérisé en ce**
**que** la température du liquide colorant varie entre 50° C et 95° C.

4. Procédé suivant la revendication 1, **caractérisé en ce**
**que** le liquide colorant est une solution colorée aqueuse.

5. Procédé suivant la revendication 1, **caractérisé en ce**
**que** le liquide colorant contient avant tout des colorants acides.

6. Procédé suivant la revendication 1, **caractérisé en ce**
**que** le séchage est effectué sous vide et avec une pression de 1 à 5 millibars.
